# EUROPEAN PATENT APPLICATION

(11) **EP 2 393 018 A2**
(43) Date of publication of application: **07.12.2011**
(21) Application number: 11004481.5
(22) Date of filing: 01.06.2011
(51) Int. Cl.: G06F 17/21, G06F 17/30

(54) **Method for improved visualization**

(30) Priority: 01.06.2010 EP 10005686; 01.06.2010 US 350285 P
(71) Applicant: Deutsche Telekom AG, 53113 Bonn (DE)
(72) Inventor: Rippl, Frank, 10119 Berlin (DE)
(74) Representative: Schwöbel, Thilo K.

(57) **Abstract**

The invention relates to a method, a system, a program and a computer program product for improved visualization of a plurality of broadcast items related to different content sources or channels, wherein each broadcast item is related to at least one time related information, wherein the plurality of broadcast items is visualized in the form of a tag cloud comprising a multitude of different tag items, wherein each tag item of the tag cloud has a weighting attributed, wherein the tag items of the tag cloud are visualized dependent on the at least one time related information and dependent on the attributed weighting.

## Description

### BACKGROUND

The present invention relates to a method, a system, a program and a computer program product for improved visualization of a plurality of pieces of information related to different sources or channels, especially for information related to a specific point in time.

Methods for visualizing information by means of a tag cloud are generally known. Such methods are described e.g. in EP 2 136 301 A1, which discloses a method and an apparatus for visualizing a tag cloud of individual tags, wherein each is a certain piece of information and is formed of one or more characters, and wherein for a tag meta-information has been measured over a certain time interval so that there exists a vector of meta-information measurements for said tag, each component of said vector representing a certain meta-information measurement.

Furthermore, there are methods known for visualizing the content of a program such as a television program, especially for the situation where a multitude of different channels are accessible by a user. Such methods are described in US 20061010469 A1.

The drawback of methods according to the prior art is that the visualization of the program content of a multitude of different channels is usually organized in a manner such that the program content of different channels is separated and the selection of a specific program content usually requires to first select the appropriate channel and then the searched program content.

### SUMMARY

An object of the present invention is to provide a method, a system, a program and a computer program product for visualization of a plurality of broadcast items related to different content sources or channels. A further object of the present invention is to provide a possibility to easily select a specific broadcast item using limited input means (human machine interface) such as a television remote control device.

The object of the present invention is achieved according to a first alternative embodiment by a method for improved visualization of a plurality of broadcast items related to different content sources or channels, wherein each broadcast item is related to at least one time related information, wherein the plurality of broadcast items is visualized in the form of a tag cloud comprising a multitude of different tag items, wherein each tag item of the tag cloud has a weighting attributed, wherein the tag items of the tag cloud are visualized dependent on the at least one time related information and dependent on the attributed weighting.

The object of the present invention is achieved according to a second alternative embodiment by a method for improved visualization of a plurality of broadcast items related to different content sources or channels, wherein each broadcast item is related to at least one time related information, wherein the plurality of broadcast items is visualized in the form of a tag cloud comprising a multitude of different tag items, wherein each tag item of the tag cloud has a weighting attributed, wherein the tag items of the tag cloud are visualized dependent on the at least one time related information and dependent on the attributed weighting, wherein the weighting is calculated by means of the following steps:
-- in an initial first step, preliminary information is provided by an EPG (electronic program guide) information source, at least a piece of preliminary information being provided for each broadcast item,
-- in a second step after the first step, secondary information is provided, the secondary information being based on the preliminary information, at least a piece of secondary information being provided for each broadcast item,
-- in a third step after the second step, a set of preliminary tag items is derived from the secondary information based on a semantic analysis of the secondary information, at least one preliminary tag item of the set of preliminary tag items being provided for each broadcast item,
wherein at least a part of the preliminary tags of the set of preliminary tag items correspond to the tag items of the tag cloud, wherein the weighting of a specific tag item of the tag cloud is dependent from the occurrence of the specific tag item within the set of preliminary tag items.

According to both alternative embodiments of the present invention it is advantageously possible to easily select a broadcast item even in case that a large number of different channels or different programs (e.g. more than 50, or more than 100 or more than 200 or more than 500 channels or programs) are available at one specific point in time. According to the present invention, a user does not need to scroll through a large list of different broadcast items available on the different channels or different programs and memorize the different broadcast items that might be interesting to that user. According to the present invention, a user is able to very quickly get an overview of the different content types as well as the different content themes of an important number of different channels or programs and to quickly select the interesting group of broadcast items and finally the most interesting broadcast item (to be viewed). The method according to the present invention is very preferably a computer implemented method for improved visualization of a plurality of broadcast items related to different content sources or channels. '

In the context of this invention, i.e. according to both alternative embodiments of the present invention, the tag cloud is a number of displayed words or signs or icons that are representative and related, e.g., to a specific person or location or the like. In the context of the present invention, a tag element is one element of the tag cloud, i.e. one word or sign or icon representing visually an internet or hypertext link.

According to both alternative embodiments of the present invention it is preferred that the tag items of the tag cloud are located dependent on the attributed weighting. Alternatively or cumulatively, it is preferred according to both alternative embodiments of the present invention that the tag items of the tag cloud are represented by means of differently large letters, characters, icons or signs, the dimension of the letters, characters, icons or signs of a specific tag item being dependent on the weighting attributed or broadcast items assigned to that specific tag item.

] It is thereby advantageously possible for a user to easily find and select the interesting tag item. Furthermore, the search for the interesting tag item can be shortened because the information about the different broadcast items is not visualized in a somewhat artificial or inappropriate manner (namely according to, e.g. broadcast channel numbers or the alphabetical order of the names of several broadcast channels) but according to a semantically linked manner.

According to the second alternative embodiment of the present invention, it is preferred that in a fourth step after the third step, the set of preliminary tag items is processed by means of assigning an additional weighting factor to each preliminary tag item of the set of preliminary tag items.

Thereby, it is advantageously possible to account for a differentiation between the preliminary tag items, e.g. by means of processing the preliminary tag items by means of using a dictionary, a specific preliminary tag item that does not correspond to an entry in the dictionary is discarded from further processing (e.g. by attributing an additional weighting factor equal to zero).

According to the second alternative embodiment of the present invention, it is furthermore preferred that the additional weighting factor is dependent on whether the preliminary tag item corresponds to the name of a real person or to the name of a non-real person or to the name of a location or to the name of an activity or to the name of a category of broadcast items or to the name of a sub-category of broadcast items.

Thereby, it is advantageously possible to account for different categories of the preliminary tag items, e.g. by differentiating between tag items related to living persons or related to fictional persons or related to locations or the like.

According to the second alternative embodiment of the present invention, it is furthermore preferred that the weighting of a specific tag item of the tag cloud is proportional to the occurrence of the specific tag item within the set of preliminary tag items.

According to the second alternative embodiment of the present invention, it is furthermore preferred that the weighting of a specific tag item of the tag cloud is proportional to both
-- the occurrence of the specific tag item within the set of preliminary tag items, and
-- the additional weighting factor.

According to both alternative embodiments of the present invention it is furthermore preferred that the tag items of the tag cloud are located dependent on a chosen point in time along a timeline.

Thereby, it is advantageously possible to select only relevant information n presented and to discard such information that are less important such as programs broadcast at a point in time that is not interesting for the user. For example, it is possible that a timeline is visualized (or an input option provided to a user such that a point in time (preferably only in the future) can be input) and that after specifying a specific point in time along the timeline (or by specifying a specific time interval along the time line), the associated tag cloud is first generated or retrieved and then visualized to the user wanting to select a broadcast item by selecting a tag item corresponding to the broadcast item.

Furthermore, it is preferred according to both alternative embodiments of the present invention that the time related information is a point in time or a time interval.

According to both alternative embodiments of the present invention it is thereby advantageously possible to flexibly refer either to e.g. the starting point of a broadcast program or to the complete interval of time when the program is broadcast.

According to both alternative embodiments of the present invention it is furthermore preferred that one tag item of the tag cloud refers to one or at least two broadcast items, wherein a predefined first number corresponds to the maximum number of broadcast items related to one tag item.

Thereby, it is advantageously possible that at a level below the tag items, a user is not overwhelmed with too much information regarding different programs available. Furthermore, this avoids generally to scroll a comparably long list of possible entries.

Furthermore, it is preferred according to both alternative embodiments of the present invention that a broadcast item is related to at least two tag items of the tag cloud, wherein a predetermined second number corresponds to the maximum number of tag items related to one broadcast item.

According to both alternative embodiments of the present invention it is thereby advantageously possible to be able to arrive at an interesting broadcast item via two or more different ways, i.e. by clicking on different tag items.

According to both alternative embodiments of the present invention it is furthermore preferred that a tag item of the tag cloud is generated based on information out of at least one of an electronic program guide and a news service.

Thereby, it is advantageously possible to automatically generate the different tags for the tag items, i.e. it is possible that the word being present in the tag cloud correspond to the relevant programs broadcast at a specific point in time and furthermore that the tag items remain up to date by means of integrating a news service for tag item generation.

Furthermore, it is preferred according to both alternative embodiments of the present invention that the weighting attributed to a tag item is obtained dependent on whether the tag item corresponds to the name of a real person or to the name of a non-real person or to the name of a location or to the name of an activity or to the name of a category or to the name of a sub-category.

According to both alternative embodiments of the present invention it is thereby advantageously possible to provide the tag cloud in an easy and well-arranged manner.

Another object of the first alternative embodiment of the present invention is a system for improved visualization of a plurality of broadcast items related to different content sources or channels, wherein the system comprises a processing unit, wherein the system is connectable to an information providing entity, wherein electronic program guide information is received by the system, wherein the system provides for a visualization such that each broadcast item is related to at least one time related information, wherein the plurality of broadcast items is visualized in the form of a tag cloud comprising a multitude of different tag items, wherein each tag item of the tag cloud has a weighting attributed, wherein the tag items of the tag cloud are visualized dependent on the at least one time related information and dependent on the attributed weighting.

Another object of the second alternative embodiment of the present invention is a system for improved visualization of a plurality of broadcast items related to different content sources or channels, wherein the system comprises a processing unit, wherein the system is connectable to an information providing entity, wherein electronic program guide information is received by the system, wherein the system provides for a visualization such that each broadcast item is related to at least one time related information, wherein the plurality of broadcast items is visualized in the form of a tag cloud comprising a multitude of different tag items, wherein each tag item of the tag cloud has a weighting attributed, wherein the tag items of the tag cloud are visualized dependent on the at least one time related information and dependent on the attributed weighting, wherein the system is configured such that:
-- preliminary information is provided by an EPG (electronic program guide) information source, at least a piece of preliminary information being provided for each broadcast item,
- secondary information is provided, the secondary information being based on the preliminary information, at least a piece of secondary information being provided for each broadcast item,
-- a set of preliminary tag items is derived from the secondary information based on a semantic analysis of the secondary information, at least one preliminary tag item of the set of preliminary tag items being provided for each broadcast item,
   wherein at least a part of the preliminary tags of the set of preliminary tag items correspond to the tag items of the tag cloud, wherein the weighting of a specific tag item of the tag cloud is dependent from the occurrence of the specific tag item within the set of preliminary tag items.

Such a system, according to both the first or the second alternative embodiment of the present invention, might be realized by means of a server being connected to at least one but preferably a multitude of different information sources such that representations of the inventive visualization method are provided to client system, e.g. located in a customer premise or in a portable system like a smart phone or the like. An inventive system might also be realized by means of a device located in a customer premise (such as a television attached device) being connectable (especially via the internet) to an information providing entity.

According to the second alternative embodiment of the present invention, it is preferred that the system is configured such that the set of preliminary tag items is processed by means of assigning an additional weighting factor to each preliminary tag item of the set of preliminary tag items.

According to the second alternative embodiment of the present invention, it is preferred that the additional weighting factor is dependent on whether the preliminary tag item corresponds to the name of a real person or to the name of a non-real person or to the name of a location or to the name of an activity or to the name of a category of broadcast items or to the name of a sub-category of broadcast items.

Still another object of the first alternative embodiment of the present invention is a program comprising a computer readable program code for improved visualization of a plurality of broadcast items related to different content sources or channels, wherein the program code provides for a visualization such that each broadcast item is related to at least one time related information, wherein the plurality of broadcast items is visualized in the form of a tag cloud comprising a multitude of different tag items, wherein each tag item of the tag cloud has a weighting attributed, wherein the tag items of the tag cloud are visualized dependent on the at least one time related information and dependent on the attributed weighting.

Still another object of the second alternative embodiment of the present invention is a program comprising program code which, when executed on a computer, causes the computer to perform an inventive method.

Another object of the first alternative embodiment of the present Invention is a computer program product for improved visualization of a plurality of broadcast items related to different content sources or channels, wherein the program code provides for a visualization such that each broadcast item is related to at least one time related information, wherein the plurality of broadcast items is visualized in the form of a tag cloud comprising a multitude of different tag items, wherein each tag item of the tag cloud has a weighting attributed, wherein the tag items of the tag cloud are visualized dependent on the at least one time related information and dependent on the attributed weighting.

Another object of the second alternative embodiment of the present invention is a computer program product for improved visualization of a plurality of broadcast items related to different content sources or channels, the computer program product comprising a computer program stored on a storage medium, the computer program comprising program code which, when executed on a computer, causes the computer to perform an inventive method.

It will be understood by a person skilled in the art that other modifications or varieties of the invention are possible without departing from the broader spirit of the invention, Such modifications are therefore to be considered as falling within the spirit and the scope of the invention and hence forming part of the invention as herein described or exemplified. Accordingly the exemplary description is to be regarded in an illustrative sense rather than in a restrictive sense.

### BRIEF DESCRIPTION OF THE DRAWINGS

Figure 1 schematically shows a visualization of a tag cloud related to a first point in time and obtained by executing the method according to the present invention.

Figure 2 schematically shows a visualization of a tag cloud related to a second point in time and obtained by executing the method according to the present invention.

Figure 3 schematically shows a visualization of a plurality of broadcast Items related to a tag item shown in Figure 1.

Figure 4 schematically shows a flow chart related to the method according to a first alternative embodiment of the present invention.

Figure 5 schematically shows a flow chart related to the method according to a second alternative embodiment of the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article Is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

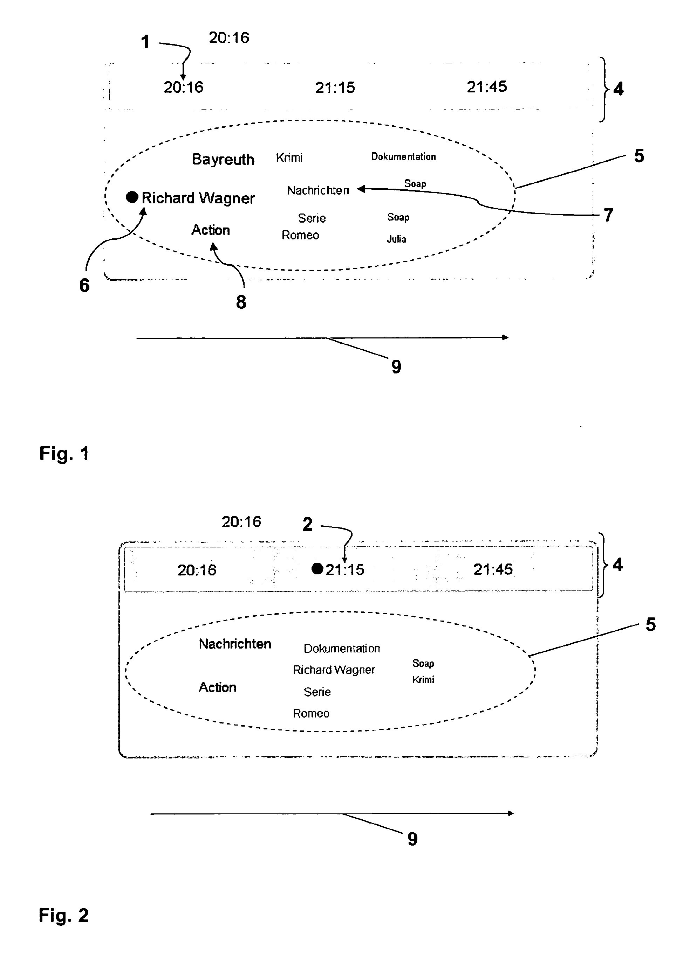

In Figure 1, a visualization of a tag cloud 5 related to a first point in time 1 and obtained by executing the method according to both alternative embodiments of the present invention is schematically shown. The tag cloud 5 comprises a plurality of tag items; a first tag item 6, a second tag item 7 and a third tag item 8 being exemplarily shown in Figure 1 and reference by the respective reference numerals.

The tag items 6, 7, 8 of the tag cloud 5 are intended for illustrative purposes only and do not have a meaning other than examples of character strings such as "Richard Wagner" or the like. Other examples of such character strings would be "ABCDE" or "12345". or the like. For example, the first tag item 6 is related to the character string "Richard Wagner" representing the name of a person (a composer). The second tag item 7 is related to the character string "Action" representing the term for specifying a genre of movies or other video content. The third tag item 8 is related to the character string "Nachrichten" representing the term (in German language) related to news.

The visualization of the tag items 6, 7, 8 of the tag cloud 5 as shown in Figure 1, shows a timeline 4, extending in the example of Figure 1 in the top part of the representation and being arranged such that earlier points in time are located on the left hand side of the representation whereas later points in time are located on the right hand side of the representation. For example the visualization of the timeline 4 spans approximately the time interval from 20:16 hours to 21:45 hours the first point in time 1 being indicated as 20:16 hours. The corresponding tag cloud 5 is schematically shown for the first point in time 1. The tag items 6, 7, 8 of the tag cloud 5 are related to broadcast items related to either to a starting time at or nearby the first point in time 1 or that are related to a time interval that comprises the first point in time 1. The tag items 6, 7, 8 are represented having a different size and having a different location. Both characteristics are related to a weighting attributed to each of the tag items, 6, 7, 8. According to both alternative embodiments of the present invention, it is one possibility to visualize a different weighting to visualize the tag item in different size, where a larger size means a stronger weighting attributed to the tag item and a smaller size (e.g. of the characters or of the image representing the tag item or of a corresponding icon) means a weaker weighting attributed to the tag item. According to both alternative embodiments of the present invention, it is another possibility to visualize a different weighting to visualize the tag item at a different location, where, e.g., a location towards the left hand side of the tag cloud 5 means a stronger weighting attributed to the tag item and, e.g. a location towards the right hand side of the tag cloud 5 means a weaker weighting attributed to the tag item. According to both alternative embodiments of the present invention, the weighting of a tag item 6, 7, 8 can also be visualized or expressed by means of both the size of the (characters of the) tag item 6, 7. 8 and the location of the tag item 6, 7, 8. The difference in attributed and visualized weighting as represented by the location of the tag item 6, 7, 8 is exemplarily shown by means of an arrow having the reference sign 9 in Figure 1, wherein the arrow 9 indicates the direction of a reduced weighting of the corresponding tag items 6, 7. 8.

Figure 2 schematically shows a visualization of the tag cloud related to a second point in time 2 according to both alternative embodiments of the present invention. The second point in time 2 is exemplarily shown as being 21:15 hours. The corresponding tag cloud 5 comprises other tag items than the tag cloud associated or related to the first point in time 1. These other tag items are related to other broadcast items that related to either to a starting time at or nearby the second point in time 2 or that are related to a time interval that comprises the second point in time 2. Analogously to the tag could 5 represented in Figure 1, a different weighting is attributed to the tag items of the tag cloud in Figure 2, namely varying with the size of the (characters of the) tag items and varying with the location of the tag items.

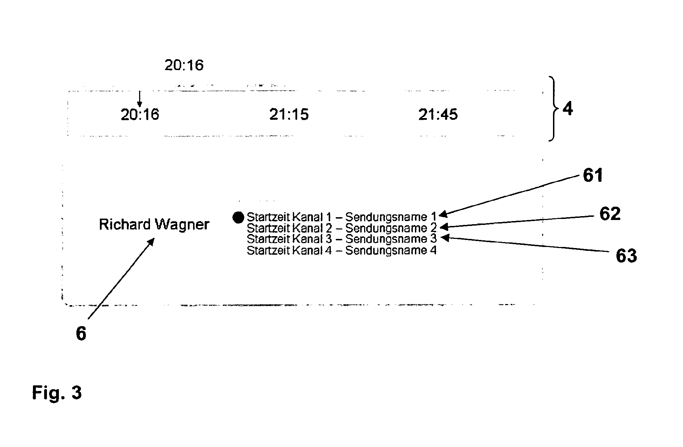

Figure 3 schematically shows a visualization of a plurality of broadcast items 61, 62,63 related to the first tag item 6 shown in Figure 1. The representation as shown in Figure 3 can, e.g., be obtained by selecting the first tag item 6, i.e. for example by clicking on one of the characters of the first tag item 6 or in the vicinity of the first tag item 6. The first broadcast item 61 indicates for example an information regarding the starting time ("Startzeit") and the channel number ("Kanal 1 ") of an emission having the title "Sendungsname 1 ". The second broadcast item 62 indicates for example an information regarding the starting time ("Startzeit") and the channel number ("Kanal 2") of an emission having the title "Sendungsname 2". The third broadcast item 63 indicates for example an information regarding the starting time ("Startzeit") and the channel number ("Kanal 3") of an emission having the title "Sendungsname 3".

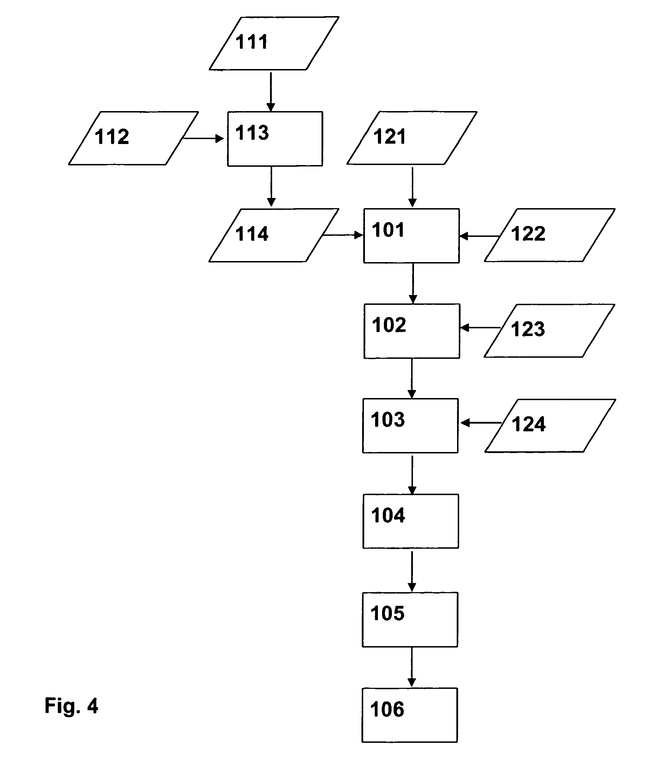

In Figure 4, a flow chart related to the method according to the first alternative embodiment of the present invention is schematically shown. According to a preliminary step 113 of the first alternative embodiment of the method according to the present invention, electronic program guide information (EPG information) is received from a first server or a first database 111. Furthermore, information relating to classes of tags or classes of tag items is received from a second server or a second database 112. From these information. EPG information including information related to the tags to be used (tag-including EPG information 114) are generated in the preliminary step 113 and stored in a third server or third database 114.

In a first step 101 of the first alternative embodiment of the method according to the present invention, the tag-including EPG information are either generated in a processing unit (in case that the preliminary step and the further steps are executed on the same processing unit) or received from the third server or third database 114 by the processing unit. Furthermore, tag information related to news, preferably received from a news service, is received in the first step 101 from a fourth server or a fourth database 121. Furthermore, information relating to categories and sub-categories for tag items relating to news is received in the first step 101 from a fifth server or a fifth database 122.

In a second step i 02 of the first alternative embodiment of the inventive method, a classification of the tag items 6, 7, 8 is performed based on information received from a sixth server or sixth database 123 providing a dictionary containing assignments of classes.

In a third step 103 of the first alternative embodiment of the inventive method, a weighting is attributed to the tag items 6. 7, 8 based on information received from a seventh server or seventh database 124 providing weighting coefficients of the tag classes.

In a fourth step 104 of the first alternative embodiment of the inventive method, an assignment of the tag items 6, 7, 8 to a time related information, especially to the starting time (being a point in time) of the related broadcast items or to the time interval during which the emission of the broadcast item takes plate (being a time interval).

In a fifth step 105 of the first alternative embodiment of the inventive method, the tag cloud 5 relating to a specific point in time or relating to a specific time interval is generated and in a sixth step 106 of the first alternative embodiment of the inventive method, the broadcast items relating to a specific tag item are generated.

The tag items generated in the preliminary step 113 and in the first step 101 1 are obtained form meta-information or EPG data. Thereby, nouns, adjectives and/or verbs are extracted from the EPG data. Furthermore, information about categories, sub-categories, involved real or non-real persons are added. Additionally, news information are assigned to a number of broadcast items (or emissions). The tag items are (in the second step 102 of the first alternative embodiment of the inventive method) compared with the information of the sixth database or the sixth server 123, i.e. a dictionary comprising tag classes (i.e. the information whether a tag item corresponds to (the name of) a real person or to (the name of) a non-real person or to (the name of) a location or to (the name of) an activity or to (the name of) a category or to (the name of) a sub-category. Tag items (or character strings of tag items) that do not occur in the dictionary of the sixth server or sixth database 123, are preferably not retained or displayed in the tag cloud 5.

The weighting of each tag item corresponds to a respective coefficient associated to each kind of tag (either a "real person tag" or "a non-real person tag" or "a location tag" or "an activity tag" or " a category tag" or "a sub-category tag").

According to the present invention, it is preferred that each broadcast item is associated with at least one tag item corresponding to the time related information in the form of at least one minute of a broadcast day, wherein the minute corresponds, e.g. to the starting time of the broadcast item. Alternatively, it is also possible that each broadcast item is associated with at least one tag item corresponding to the time related information in the form of all the minutes of a broadcast day corresponding to the time interval of the broadcast item being emitted.

According to the present invention, it is preferred that in case that more than one broadcast items 61, 62, 63 relate to one specific tag item 6, and in case that the corresponding weightings (associated to the different broadcast items 61, 62, 63) do not differ by more than a specific limit value q then all these broadcast items are associated to the tag item 6 having one associated weighting (this weighting corresponding, e.g., to the average weighting of the different broadcast items 69, 62, 63).

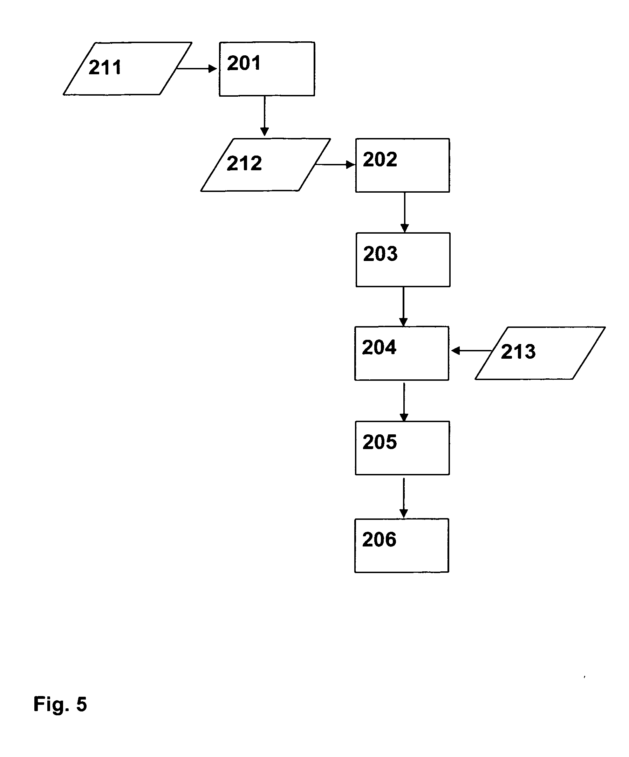

In Figure 5, a flow chart related to the method according to the second alternative embodiment of the present invention is schematically shown.

According to a first step 201 of the second embodiment of the method according to the present invention, electronic program guide information (EPG information) is received from a first server or a first database 2i 1, also called EPG (electronic program guide) information source. The EPG information comprises preliminary information such as the title of a broadcast item, the genre of a broadcast item, the category of a broadcast item, the producer of a movie of the broadcast item (in case that the broadcast item is or relates to a movie), the television channel (especially in case of broadcast items relating to a news broadcast or the like).

Based on the preliminary information, which is preferably a standard EPG information (e.g. DVB-SI EPG description in ETSI EN 300 468. ETSI TR 101 211or XML.TV format ) secondary information are provided by a second database or second server 212 in a second step 202 of the second embodiment of the method according to the present invention. The secondary information are especially intemet-based information such as information retrievable from RSS-feeds or information retrievable from move databases (such as'The Internet Movie Database", IMDb).

The kind of the selected information source for providing the secondary information is dependent, e.g., on the genre or category associated with the broadcast item as specified by the preliminary information. For example, the preliminary information related to a specific movie broadcast item is provided by a movie database for retrieving, as the secondary information, additional information of the content of the movie, of actors, of producers or of fictional persons of that specific movie. Furthermore and according to another example, the preliminary information related to a specific news broadcast item is provided to a news RSS feed site or XML data for retrieving, as the secondary information, additional information of the topics covered.

According to a third step 203 of the second embodiment of the method according to the present invention, a set of preliminary tag items is derived from the secondary information based on a semantic analysis of the secondary information, at least one preliminary tag item of the set of preliminary tag items being provided for each broadcast item 61, 62, 63. In the set of preliminary tag items, there are some preliminary tag items that occur more often than other preliminary tag items. This is used for deriving the weighting of a specific tag item 6, 7, 8 of the tag cloud 5: According to the second embodiment of the present invention, this weighting of a specific tag item 6, 7, 8 of the tag cloud 5 is dependent from the occurrence of the specific tag item 6, 7, 8 within the set of preliminary tag items. Preferably, this weighting of a specific tag item 6, 7, 8 of the tag cloud 5 is chosen proportionally to the occurrence of the specific tag item 6, 7, 8 within the set of preliminary tag items.

According to a fourth step 204 of the second embodiment of the method according to the present invention, the set of preliminary tag items is processed by means of assigning an additional weighting factor to each preliminary tag item of the set of preliminary tag items. Preferably, the additional weighting factor is dependent on whether the preliminary tag item corresponds to the name of a real person or to the name of a non-real person or to the name of a location or to the name of an activity or to the name of a category of broadcast items or to the name of a sub-category of broadcast items.

According to the second embodiment of the method according to the present invention, the additional weighting factor is obtained, e.g., by means of processing the preliminary tag items by means of using a dictionary. Thereby, it is easily possible to attribute a higher importance to certain words, terms, signs, icons or other displayable entities, and it is easily possible to discard a specific preliminary tag item: if it does not correspond to an entry in the dictionary, it is discarded from further processing (e.g. by attributing an additional weighting factor equal to zero).

It is especially preferred according to the present invention that the weighting of a specific tag item 6, 7, 8 is the product of:
-- the occurrence of this tag in the set of preliminary tag items, and
-- the additional weighting factor.

In a fifth step 205 of the second embodiment of the inventive method, an assignment of the tag items 6, 7, 8 to a time related information, especially to the starting time (being a point in time) of the related broadcast items or to the time interval during which the emission of the broadcast item takes place (being a time interval). Preferably, the tag cloud 5 is made up of the preliminary tag items such that the preliminary tag items (excluding, of course, multiple occurrences) having the highest weighting are considered and therefore become tag items 6, 7, 8 displayed in the tag cloud 5. Preferably, the process of including preliminary tag items into the tag cloud 5 stops when all broadcast items are covered by (or related to) at least one tag item 6, 7, 8 of the tag cloud 5.

In a sixth step 206 of the second embodiment of the inventive method, the tag cloud 5 relating to a specific point in time or relating to a specific time interval is displayed.

The preliminary information generated in the first step 201 are obtained from meta-information, especially EPG data. Thereby, nouns, adjectives and/or verbs are extracted from the EPG data. Furthermore, information about categories, sub-categories, involved real or non-real persons are added.

According to the second alternative embodiment of the present invention, it is preferred that each broadcast item is associated with at least one tag item corresponding to the time related information in the form of at least one minute of a broadcast day, wherein the minute corresponds, e.g. to the starting time of the broadcast item. Alternatively, it is also possible that each broadcast item is associated with at least one tag item corresponding to the time related information in the form of all the minutes of a broadcast day corresponding to the time interval of the broadcast item being emitted.

According to both alternative embodiments of the present invention, it is furthermore preferred that one broadcast item can be represented by a plurality of tag items 6, 7, 8 but that a limit x (or second number) exists that corresponds to the maximum number of tag items 6, 7, 8 related to one broadcast item 61, 62, 63. Furthermore, it is preferred according to both alternatives of the present invention that one tag item 6, 7, 8 refers to one broadcast item 61, 62, 63 or to a plurality of broadcast items (i.e. to at least two broadcast items 61, 62, 63) but a limit y (or first number) exists which corresponds to the maximum number of broadcast items 61, 62, 63 related to one tag item 6, 7, 8.

## Claims

1. Method for improved visualization of a plurality of broadcast items (61, 62. 63) related to different content sources or channels, wherein each broadcast item {61, 62. 63) is related to at least one time related information, wherein the plurality of broadcast items (61, 62, 63) is visualized in the form of a tag cloud (5) comprising a multitude of different tag items (6, 7, 8), wherein each tag item (6, 7, 8) of the tag cloud (5) has a weighting attributed, wherein the tag items (6, 7, 8) of the tag cloud (5) are visualized dependent on the at least one time related information and dependent on the attributed weighting, wherein the weighting is calculated by means of the following steps:
-- in an initial first step, preliminary information is provided by an EPG (electronic program guide) information source, at least a piece of preliminary information being provided for each broadcast item (61, 62, 63),
-- in a second step after the first step, secondary information is provided, the secondary information being based on the preliminary information, at least a piece of secondary information being provided for each broadcast item (61, 62, 63),
-- in a third step after the second step, a set of preliminary tag items is derived from the secondary information based on a semantic analysis of the secondary information, at least one preliminary tag item of the set of preliminary tag items being provided for each broadcast item (61, 62, 63),
wherein at least a part of the preliminary tags of the set of preliminary tag items correspond to the tag items (6, 7, 8) of the tag cloud (5), wherein the weighting of a specific tag item (6, 7, 8) of the tag cloud (5) is dependent from the occurrence of the specific tag item (6. 7, 8) within the set of preliminary tag items.

2. Method according to claims 1, wherein in a fourth step after the third step, the set of preliminary tag items is processed by means of assigning an additional weighting factor to each preliminary tag item of the set of preliminary tag items.

3. Method according to claim 2, wherein the additional weighting factor is dependent on whether the preliminary tag item corresponds to the name of a real person or to the name of a non-real person or to the name of a location or to the name of an activity or to the name of a category of broadcast items or to the name of a sub-category of broadcast items.

4. Method according to one of the preceding claims, wherein the weighting of a specific tag item (6, 7, 8) of the tag cloud (5) is proportional to the occurrence of the specific tag item (6, 7, 8) within the set of preliminary tag items.

5. Method according to one of the claims 2 to 4, wherein the weighting of a specific tag item (6, 7, 8) of the tag cloud (5) is proportional to both
-- the occurrence of the specific tag item (6, 7, 8) within the set of preliminary tag items, and
-- the additional weighting factor.

6. Method according to one of the preceding claims, wherein the tag items (6, 7, 8) of the tag cloud (5) are located dependent on the attributed weighting.

7. Method according to one of the preceding claims, wherein the time related information is a point in time or a time interval.

8. Method according to one of the preceding claims, wherein one tag item (6, 7, 8) of the tag cloud (5) refers to one or at least two broadcast items (61, 62, 63), wherein a predefined first number corresponds to the maximum number of broadcast items (61, 62, 63) related to one tag item (6, 7, 8).

9. Method according to one of the preceding claims, wherein a broadcast item is related to at least two tag items (6, 7, 8) of the tag cloud (5), wherein a predetermined second number corresponds to the maximum number of tag items (6, 7, 8) related to one broadcast item (61, 62, 63).

10. System for improved visualization of a plurality of broadcast items {61, 62, 63) related to different content sources or channels, wherein the system comprises a processing unit, wherein the system is connectable to an information providing entity, wherein electronic program guide information is received by the system, wherein the system provides for a visualization such that each broadcast item (61, 62, 63) is related to at least one time related information, wherein the plurality of broadcast items (61, 62, 63) is visualized in the form of a tag cloud (5) comprising a multitude of different tag items (6, 7, 8), wherein each tag item (6, 7, 8) of the tag cloud (5) has a weighting attributed, wherein the tag items (6, 7, 8) of the tag cloud (5) are visualized dependent on the at least one time related information and dependent on the attributed weighting, wherein the system is configured such that:
-- preliminary information is provided by an EPG (electronic program guide) information source, at least a piece of preliminary information being provided for each broadcast item (61, 62, 63),
-- secondary information is provided, the secondary information being based on the preliminary information, at least a piece of secondary information being provided for each broadcast item (61, 62, 63),
-- a set of preliminary tag items is derived from the secondary information based on a semantic analysis of the secondary information, at least one preliminary tag item of the set of preliminary tag items being provided for each broadcast item (61, 62, 63),
wherein at least a part of the preliminary tags of the set of preliminary tag items correspond to the tag items (6, 7, 8) of the tag cloud (5), wherein the weighting of a specific tag item (6, 7, 8) of the tag cloud (5) is dependent from the occurrence of the specific tag item (6, 7, 8) within the set of preliminary tag items.

11. System according to claim 10, wherein the system is configured such that the set of preliminary tag items are processed by means of assigning an additional weighting factor to each preliminary tag item of the set of preliminary tag items.

12. System according to claim 10 or 11, wherein the additional weighting factor is dependent on whether the preliminary tag item corresponds to the name of a real person or to the name of a non-real person or to the name of a location or to the name of an activity or to the name of a category of broadcast items or to the name of a sub-category of broadcast items.

13. Program comprising program code which, when executed on a computer, causes the computer to perform a method according one of claims 1 to 9.

14. Computer program product for improved visualization of a plurality of broadcast items (61, 62, 63) related to different content sources or channels, the computer program product comprising a computer program stored on a storage medium, the computer program comprising program code which, when executed on a computer, causes the computer to perform a method according one of claims 1 to 9.
